# EUROPÄISCHE PATENTSCHRIFT

(11) **EP 2 760 657 B1**
(45) Veröffentlichungstag und Bekanntmachung des Hinweises auf die Patenterteilung: **27.06.2018**
(21) Anmeldenummer: 12778037.7
(22) Anmeldetag: 21.09.2012
(51) Int. Cl.: B29C 47/08, B29C 47/66, B29C 47/82, B29C 47/38, B29C 47/10, B29C 47/92

(54) **HALTEVORRICHTUNG FÜR EIN EXTRUDERGEHÄUSE**
RETAINING DEVICE FOR AN EXTRUDER HOUSING
DISPOSITIF DE FIXATION POUR BOÎTIER D'EXTRUDEUSE

(30) Priorität: 30.09.2011 DE 102011114577
(43) Veröffentlichungstag der Anmeldung: 06.08.2014
(73) Patentinhaber: Thermo Electron (Karlsruhe) GmbH, 76227 Karlsruhe (DE)
(72) Erfinder: ROBERTS, Peter, Stone Staffordshire ST15 8ZB (GB)
(74) Vertreter: Lichti - Patentanwälte Partnerschaft mbB
(86) Internationale Anmeldenummer: PCT/EP2012/003950
(87) Internationale Veröffentlichungsnummer: WO 2013/045060

(56) Entgegenhaltungen:
- EP-A2- 1 627 723
- EP-A2- 1 762 362
- JP-A- 6 297 540
- JP-A- 60 203 400
- JP-A- 2001 150 509
- KR-B1- 100 877 595
- US-A1- 2011 070 324

## Beschreibung

Die Erfindung betrifft ein Extruder mit einem Extrudergehäuse, das zumindest zwei Gehäuseteile aufweist und in dem zum Extrudieren eines Mediums ein Förderkanal ausgebildet ist, in dem zumindest eine Förderschnecke angeordnet ist, wobei das Extrudergehäuse mittels einer ersten Haltevorrichtung lösbar auf einem Gestell gehalten und die Förderschnecke in einem Wellenabschnitt in lösbarer Weise mit einer Antriebsvorrichtung verbunden ist.
Ein Extruder ist eine Fördervorrichtung, die mittels eines Schneckenförderers ein festes, flüssiges oder pulverförmiges Medium insbesondere unter Druck und bei hoher Temperatur aus einer formgebenden Öffnung herauspresst. Dabei lassen sich Verarbeitungsextruder und Aufbereitungsextruder unterscheiden. Ein Verarbeitungsextruder dient im wesentlichen der Formgebung, während ein Aufbereitungsextruder der chemischen und/oder physikalischen Modifizierung, beispielsweise der Mischung, Entgasung oder Untersuchung von Stoffen dient. Beide Arten von Extrudern sollen erfindungsgemäß mit umfasst sein.

Ein Extruder besitzt ein Extrudergehäuse, in dem ein Misch-oder Förderkanal für das zu fördernde und extrudierende Medium ausgebildet ist. In dem Förderkanal ist unter enger Passung zumindest eine Förderschnecke angeordnet, die drehangetrieben ist, wodurch das Medium längs des Förderkanals transportiert wird. Ein Extruder kann eine, zwei oder sogar mehrere Förderschnecken umfassen, die je nach Art des Mediums und der Förderung entweder gleichsinnig oder gegensinnig angetrieben sind.

Das Extrudergehäuse ist üblicherweise aus mehreren Gehäuseteilen aufgebaut. Aus der DE 10 2010 027 662 A1 ist es bekannt, das Extrudergehäuse horizontal in zumindest ein Gehäuse-Oberteil und zumindest ein Gehäuse-Unterteil zu teilen. Alternativ ist es jedoch auch bekannt, das ExtruderGehäuse vertikal zu teilen, so dass dann zumindest ein rechtes Gehäuseteil und zumindest ein linkes Gehäuseteil vorhanden sind. Beispielhaft soll im folgenden von einer horizontalen Teilung des Extrudergehäuses ausgegangen werden, wobei die Erfindung darauf jedoch nicht beschränkt ist.

Bei einem Wechsel des zu extrudierenden oder zu verarbeitenden Mediums ist es notwendig, das Extrudergehäuse auseinander zu bauen und die Bauteile zu reinigen. Zu diesem Zweck wird zunächst das Gehäuse-Oberteil vom Gehäuse-Unterteil gelöst und abgenommen, woraufhin die Förderschnecke entnommen werden kann. Anschließend wird das Gehäuse-Unterteil, das üblicherweise mit einem darunter liegenden Gestell verschraubt ist, gelöst, so dass es ebenfalls abgenommen werden kann. Die Bauteile werden dann gereinigt und können anschließend wieder zusammengebaut werden.

Nachteilig bei diesem Vorgehen ist, dass der Extruder bei einem Produktwechsel für eine relativ lange Zeit still steht, was unwirtschaftlich ist.
Desweiteren besteht die Gefahr, dass beim Auseinanderbauen des Extruders Produktreste in die Umgebung gelangen, was insbesondere bei Verwendung des Extruders in einem Reinraum in der Produktion der pharmazeutischen Industrie nicht akzeptabel ist.

Aus der EP 1 627 723 A2 ist ein Extruder bekannt, bei dem das Extrudergehäuse auf einem gestellartigen Träger sitzt, der von einer Unterkonstruktion abnehmbar ist. Auf dem Träger sind zusätzlich sämtliche notwendigen Kühlmittel-, Strom- und Steuerleitungen angeordnet, die in einem entsprechenden auf dem Träger sitzenden Gehäusekasten aufgenommen sind. Der Träger bildet zusammen mit dem Extrudergehäuse und dem Gehäusekasten sowie allen Leitungen ein austauschbares Modul, das abgenommen werden kann. Mit dieser Ausgestaltung ist jedoch der Nachteil verbunden, dass das Extrudergehäuse zur Reinigung zunächst vom Träger abgebaut werden muss, da bei einer Reinigung des gesamten Moduls die Gefahr besteht, dass die relativ empfindlichen Leitungen beschädigt werden. Dem Dokument JP 2001/150509 ist ein Extruder zu entnehmen, bei dem das Extrudergehäuse von einer Antriebseinheit und einem Gestell gelöst und durch ein anderes Extrudergehäuses ersetzt werden kann. Das Dokument KR 10-0877595 zeigt einen Extruder, bei dem die Einzelteile des Extrudergehäuses durch ringförmige Klammern zusammengespannt sind, wobei das Extrudergehäuse als Einheit relativ zu den Förderschnecken abnehmbar ist. Dokument JP 60-203400 zeigt einen Extruder, bei dem das Extrudergehäuse aus zwei Gehäusehälften besteht, die relativ zueinander schwenkbar sind.

Der Erfindung liegt die Aufgabe zugrunde, ein Extruder der genannten Art zu schaffen, der bei einem Produktwechsel schnell wieder funktionsfähig ist und bei dem eine Reinigung schnell und in einfacher Weise durchführbar ist.

Diese Aufgabe wird erfindungsgemäß durch einen Extruder mit den Merkmalen des Anspruchs 1 gelöst. Dabei ist vorgesehen, dass die Gehäuseteile mittels einer zweiten Haltevorrichtung relativ zueinander fixiert sind, dass das Extrudergehäuse mittels einer dritten Haltevorrichtung mit dem Gestell verbunden und gegen ein Verschieben in Längsrichtung des Extrudergehäuses gesichert ist, und dass die Gehäuseteile bei gelöster erster und dritter Haltevorrichtung als Einheit von dem Gestell abnehmbar sind.

Erfindungsgemäß wird von der Grundüberlegung ausgegangen, das Extrudergehäuse über 3 separate Haltevorrichtungen zu halten. Neben der ersten Haltevorrichtung, die das Extrudergehäuse auf dem Gestell festhält, ist eine zusätzliche zweite Haltevorrichtung vorgesehen, die die Gehäuseteile relativ zueinander fixiert. Zusätzlich ist das Extrudergehäuse mittels einer dritten Haltevorrichtung mit dem Gestell verbunden und gegen ein Verschieben in Längsrichtung des Extrudergehäuses gesichert.

Die erste Haltevorrichtung dient dazu, das Extrudergehäuse senkrecht zu dessen Längserstreckung von oben auf das darunter liegende Gestell zu spannen. Die dritte Haltevorrichtung sichert das Extrudergehäuse in dessen Längsrichtung. Aufgrund dieser Aufteilung der Haltefunktionen können die Haltevorrichtungen konstruktiv sehr einfach beispielsweise als einfache Klammern oder Spannschellen ausgebildet sein.

Wenn bei einem Produktwechsel die erste Haltevorrichtung und die dritte Haltevorrichtung gelöst werden, kommt das Extrudergehäuse von dem darunterliegenden Gestell frei. Dabei sind die Gehäuseteile jedoch mittels der zweiten Haltevorrichtung noch weiterhin relativ zueinander fixiert, so dass das Extrudergehäuse als Einheit abgenommen und vorzugsweise in einem Nebenraum weiterbehandelt wird. Da das Extrudergehäuse somit ein eigenständiges Baumodul darstellt, kann in den Extruder ein neues Extrudergehäuse eingebaut werden, das ebenfalls ein entsprechendes Baumodul darstellt. Die Stillstandszeit des Extruders kann dadurch wesentlich verringert werden.

Im ungünstigsten Fall ist es möglich, dass die Förderschnecke aus dem abgenommenen Extrudergehäuse herausgezogen wird oder aus diesem herausfällt, bevor die gegenseitige Fixierung der beiden Gehäuseteile mittels der zweiten Haltevorrichtung gelöst ist. Um dies zuverlässig zu verhindern, ist in Weiterbildung der Erfindung vorgesehen, dass die Förderschnecke mittels eines Sicherungsteils in ihrer Axialbewegung innerhalb des Förderkanals beschränkt und an einem Herausfallen gehindert ist. Um die Förderschnecke aus dem Extrudergehäuse zu entnehmen, muss entweder das Sicherungsteil vom Benutzer entfernt werden und/oder die zweite Haltevorrichtung und somit die gegenseitige Fixierung der Gehäuseteile muss zunächst gelöst und die Gehäuseteile müssen voneinander getrennt werden, um Zugriff auf die Förderschnecke zu haben.

In Abhängigkeit von der Art des zu verarbeitenden Materials ist es notwendig, das Extrudergehäuse zu kühlen und/oder zu heizen, d.h. zu temperieren, wobei die Temperierung üblicherweise in verschiedenen, axial hintereinander liegenden Abschnitten des Extrudergehäuses einzeln und unabhängig voneinander ausgeführt werden kann. Die Erfindung sieht vor, dass an dem Gestell unterhalb des Extrudergehäuses eine Kühl- und/oder Heizvorrichtung angebracht ist und dass das Extrudergehäuse auf die Kühl- und/oder Heizvorrichtung aufgesetzt und auf dieser mittels der ersten Haltevorrichtung gehalten ist. Mit dieser Ausgestaltung ist der wesentliche Vorteil verbunden, dass das Extrudergehäuse nach dem Lösen der ersten Haltevorrichtung von der Kühl- und/oder Heizvorrichtung abgenommen werden kann, ohne dass Leitungen entfernt oder abgebaut werden müssen. Auf diese Weise ist ein sehr schneller Wechsel des Extrudergehäuses zu erreichen. Ein weiterer wesentlicher Vorteil dieser Ausgestaltung liegt darin, dass direkt an dem Extrudergehäuse keine empfindlichen Bauteile der Heiz- oder Kühlvorrichtung oder deren Sensorik oder Steuerung angeordnet sind, sondern das Extrudergehäuse besteht nur aus Metallteilen, die sich in einfacher Weise mechanisch und/oder thermisch reinigen lassen, ohne dass die Gefahr einer Beschädigung besteht.

Bei der ersten Haltevorrichtung handelt es sich vorzugsweise um mehrere Spanneinheiten, mit denen das Extrudergehäuse gegen das Gestell oder die am Gestell angebrachte Kühl-und/oder Heizvorrichtung gespannt wird. Entsprechende Spanneinheiten lassen sich schnell anbringen und schnell lösen, so dass der Abbau des Extrudergehäuses und der Einbau eines neuen Extrudergehäuses nur eine kurze Zeitspanne erfordert.

In bevorzugter Ausgestaltung der Erfindung ist vorgesehen, dass die zweite Haltevorrichtung mehrere in Längsrichtung des Extrudergehäuses beabstandete Halteeinheiten umfasst, bei denen es sich ebenfalls um Spannklammern handeln kann.

Das zu extrudierende Material wird im hinteren Bereich des Extrudergehäuses dem Förderkanal zugeführt und mittels der Förderschnecke längs des Förderkanals zu dessen vorderem Ende gefördert, wo es an einer dort angeordneten Düse austritt, die lösbar am Extrudergehäuse befestigt sein kann. Bei einem Produktwechsel muss auch die Düse ausgewechselt und gegebenenfalls gereinigt werden, da das bisher extrudierte Material sich noch in dem Düsenkanal der Düse befindet. Aus diesem Grunde ist es vorteilhaft, wenn die Düse zusammen mit dem Extrudergehäuse als Einheit abgenommen werden kann. Eine besonders einfache Anbringung der Düse ist gegeben, wenn diese in Weiterbildung der Erfindung mittels einer der Halteeinheiten der zweiten Haltevorrichtung an dem Extrudergehäuse befestigt ist.

Am hinteren Ende des Extrudergehäuses kann ein Kupplungsteil vorzugsweise lösbar befestigt sein, das beispielsweise dazu dienen kann, das Extrudergehäuse an das Gehäuse der Antriebsvorrichtung anzukoppeln. In bevorzugter Ausgestaltung der Erfindung ist vorgesehen, dass das Kupplungsteil mittels einer der Halteeinheiten der zweiten Haltevorrichtung an dem Extrudergehäuse befestigt ist und somit zusammen mit diesem als Einheit von dem Gestell abgenommen werden kann. Gleichzeitig kann das Kupplungsteil dazu dienen, ein Austreten von Material, das sich im Förderkanal befindet, am hinteren Ende des Extrudergehäuses zu unterbinden. Alternativ oder zusätzlich dazu kann das Kupplungsteil auch als Sicherungsteil dienen, das die Förderschnecke an einem Herausfallen aus dem Förderkanal hindert.

Die Förderschnecke ist an ihrem hinteren Ende mit der drehangetriebenen Abtriebswelle der Antriebsvorrichtung in lösbarer Weise verbunden. In bevorzugter Ausgestaltung der Erfindung ist vorgesehen, dass die Förderschnecke mit ihrem Wellenabschnitt mit der Abtriebswelle der Antriebsvorrichtung in Steckverbindung steht, d.h. nur in axialer Richtung lose eingesteckt ist, wobei zwischen der Abtriebswelle der Antriebsvorrichtung und dem Wellenabschnitt aber eine Drehbewegung bzw. ein Drehmoment übertragen werden kann. Dabei kann die dritte Haltevorrichtung im Bereich des Wellenabschnitts der Förderschnecke angeordnet sein und ist vorzugsweise zwischen dem Kupplungsteil und dem Gestell wirksam.

Weitere Einzelheiten und Merkmale der Erfindung sind aus der folgenden Beschreibung eines Ausführungsbeispiels unter Bezugnahme auf die Zeichnung ersichtlich. Es zeigen:

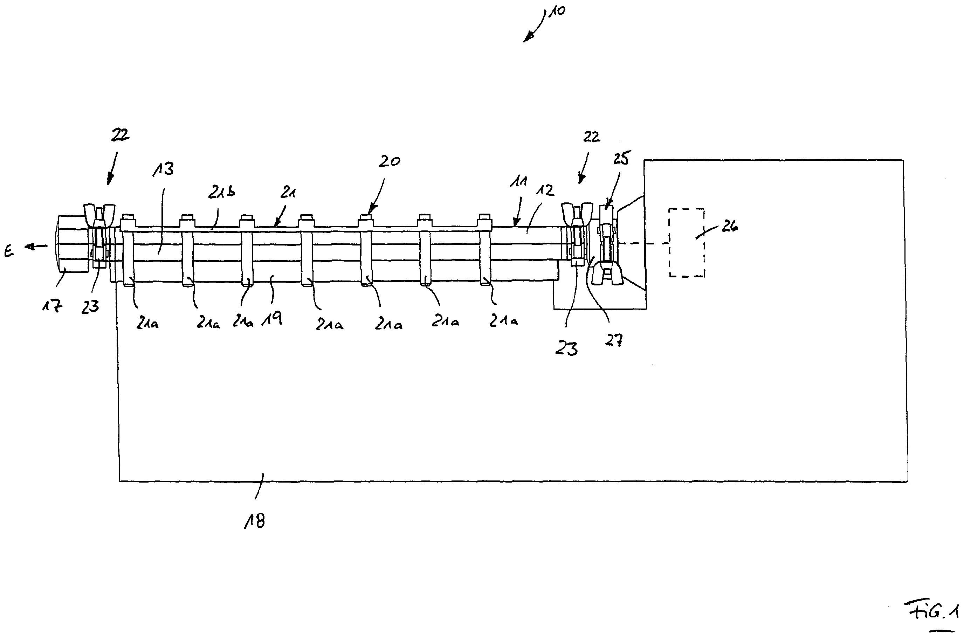

- Fig. 1: eine schematische Seitenansicht eines Extruders mit montiertem Extrudergehäuse,
- Fig. 2: eine auseinandergezogene Darstellung der Bauteile des Extruders gemäß Figur 1 bei abgenommenem Extrudergehäuse und
- Fig. 3: einen Vertikalschnitt durch das abgenommene Extrudergehäuse.

In den Figuren ist ein Extruder 10 gezeigt, der ein gehäuseartiges Gestell 18 aufweist, auf dem eine sich im Wesentlichen horizontal erstreckende Kühl- und/oder Heizvorrichtung 19 angebracht ist. Seitlich neben der Kühl- und/oder Heizvorrichtung 19 ist in dem Gestell 18 eine nicht näher dargestellte Antriebsvorrichtung 26 angeordnet, die eine Abtriebswelle 29 aufweist, die an einem kegelstumpfförmigen Gehäuseteil 30 hervorsteht. Im Bereich der Abtriebswelle 29 ist an dem Gehäuseteil 30 ein umlaufender Flansch 31 ausgebildet.

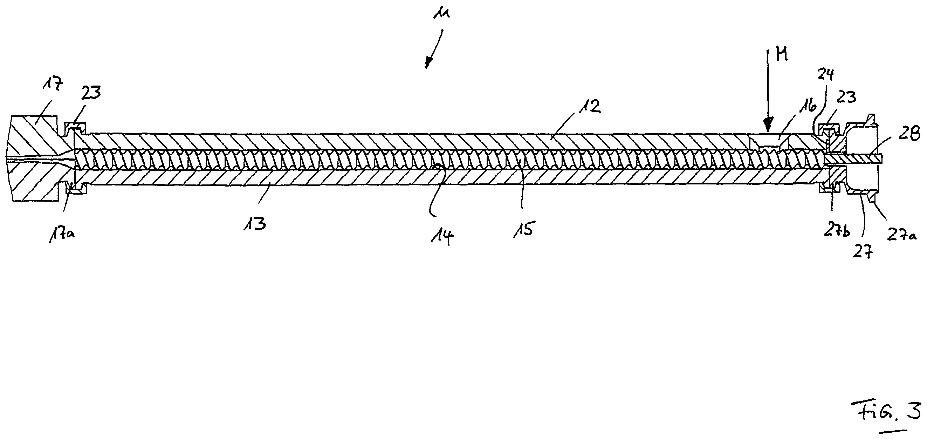

Ein Extrudergehäuse 11 umfasst gemäß Figur 3 ein Gehäuse-oberteil 12 und ein Gehäuseunterteil 13, zwischen denen ein Förderkanal 14 ausgebildet ist. In dem Förderkanal 14 ist eine Förderschnecke 15 angeordnet, die einen am hinteren Ende des Extrudergehäuses 11 hervorstehenden Wellenabschnitt 28 aufweist, der mit der Abtriebswelle 29 der Antriebsvorrichtung 26 in Eingriff bringbar ist. Das Gehäuse-Oberteil 12 besitzt im hinteren Bereich der Förderschnecke 15 eine Einfüllöffnung 16, durch die ein Material zugeführt werden kann, wie es durch den Pfeil M angedeutet ist. Das Material wird durch Drehung der Förderschnecke 15 längs des Förderkanals 14 transportiert und tritt an dessen vorderem Ende an einer Düse 17 aus.

Am hinteren Ende des Extrudergehäuses 11 ist ein Kupplungsteil 27 angeordnet, das den Wellenabschnitt 28 der Förderschnecke 15 gehäuseartig umgibt und an seinem hinteren Ende einen umlaufenden Flansch 27a aufweist, der mit dem Flansch 31 des Gehäuseteils 30 in Anlage bringbar ist. Das Kupplungsteil 27 ist so ausgestaltet, dass es in formschlüssiger Weise verhindert, dass die Förderschnecke 15 nach hinten aus dem Förderkanal 14 herausfallen kann. Zusätzlich ist am Gehäuse-Oberteil 12 ein Sicherungsteil 24 angeordnet, das ebenfalls ein axiales Herausfallen der Förderschnecke 15 aus dem Förderkanal 14 verhindert, wenn das Kupplungsteil 27 abgebaut ist.

Die genannten Bauteile sind mittels einer zweiten Haltevorrichtung 22 miteinander verbunden. Die zweite Haltevorrichtung 22 umfasst bei dem dargestellten Ausführungsbeispiel zwei Halteeinheiten 23, die als von Spannklammern gebildet sind. Eine vordere erste Halteeinheit 23 der zweiten Haltevorrichtung 22 umgreift das vordere Ende des Gehäuse-Oberteils 12, das vordere Ende des Gehäuse-Unterteils 13 sowie einen an der Düse 17 ausgebildeten umlaufenden Flansch 17a. Auf diese Weise werden sowohl die beiden Gehäuseteile 12 und 13 gegeneinander gespannt als auch die Düse 17 sicher am vorderen Ende des Extrudergehäuses 11 gehalten.

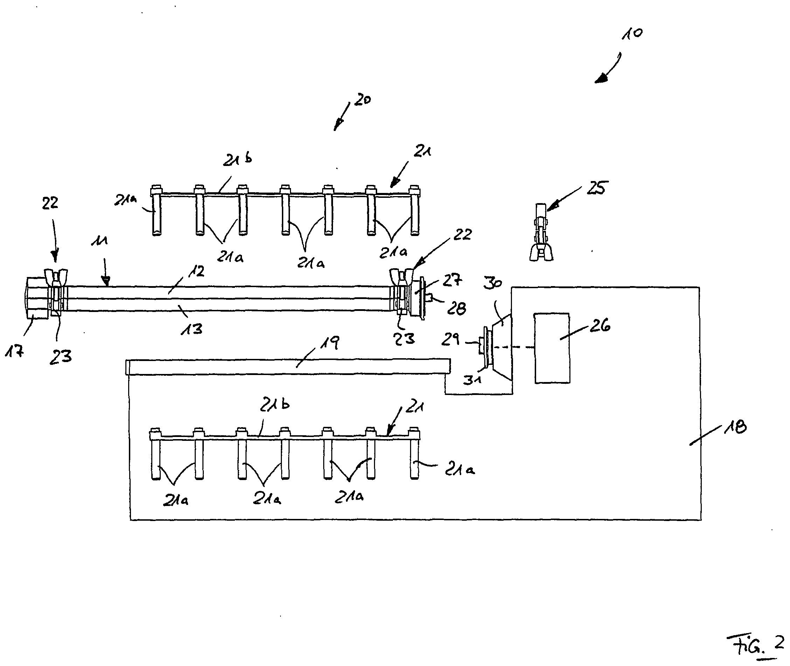

Eine hintere zweite Halteeinheit 23 der zweiten Haltevorrichtung 22 umgreift das hintere Ende des Gehäuse-Oberteils 12, das hintere Ende des Gehäuse-Unterteils 13 sowie einen am Kupplungsteil 27 ausgebildeten Halteflansch 27b. Mittels der hinteren Halteeinheit 23 werden die Gehäuseteile 11 und 12 gegeneinander gespannt und darüber hinaus das Kupplungsteil 27 fest mit dem Extrudergehäuse 11 verbunden. Wie die Figuren 2 und 3 zeigen, bilden die beiden Gehäuseteile 12 und 13 zusammen mit der Düse 17, dem Kupplungsteil 27 und der eingesetzten Förderschnecke 15 eine modulartige Baueinheit, die abgenommen und umgesetzt werden kann. Diese Baueinheit wird an dem Extruder 10 montiert, indem das Extrudergehäuse 11 mit dem Gehäuse-Unterteil 13 auf die Kühl-und/oder Haltevorrichtung 19 des Gestells 18 aufgelegt wird. Anschließend wird eine erste Haltevorrichtung 20 montiert, mit der das Extrudergehäuse 11 auf die Kühl-und/oder Heizvorrichtung 19 und somit das Gestell 18 gespannt wird. Die erste Haltevorrichtung 20 umfasst im dargestellten Ausführungsbeispiel zwei Halteeinheiten 21, wobei jede Halteeinheit 21 aus einem leistenförmigen Träger 21b besteht, an dem auf Abstand hintereinander angeordnete Spannklammern 21a gehalten sind. Die Spannklammern 21a werden so seitlich auf das Extrudergehäuse 11 und die darunterliegende Kühl- und/oder Heizvorrichtung 19 aufgesetzt und dann festgezogen, so dass das Extrudergehäuse 11 sicher auf dem Gestell 18 bzw. der Kühl- und/oder Heizvorrichtung 19 gehalten ist und diese thermisch kontaktiert wird.

Der Wellenabschnitt 28 der Förderschnecke 15 wird in die Abtriebswelle 29 der Antriebsvorrichtung 26 eingesteckt und kann gegebenenfalls in dieser auch befestigt werden. Anschließend wird auf den Flansch 31 des Gehäuseteils 30 und auf den Flansch 27a des Kupplungsteils 27 eine dritte Haltevorrichtung 25 in Form einer Spannklammer aufgesetzt und festgezogen, wodurch das Kupplungsteil 27 fest mit dem Gehäuseteil 30 und so mit dem Gestell 18 verbunden ist. Auf diese Weise wird verhindert, dass das Extrudergehäuse 11 in Längsrichtung der Förderschnecke 15 eine Verlagerung relativ zu dem Gestell 18 ausführen kann.

Um das Extrudergehäuse 11 bei einem Materialwechsel auszutauschen, werden zunächst die beiden Halteeinheiten 21 der ersten Haltevorrichtung 20 gelöst und seitlich abgezogen. Anschließend wird die dritte Haltevorrichtung 25 gelöst, so dass das aus den beiden Gehäuseteilen 11 und 12, der Düse 17, dem Kupplungsteil 27 und der Förderschnecke 15 bestehende Modul vom Extruder abgenommen werden kann, wie es in Figur 2 dargestellt ist. Die Düse 17 und das Kupplungsteil 27 verhindern dabei, dass Material aus dem Extrudergehäuse 11 an die Umgebung austreten kann. Das genannte Modul kann dann in einem Nebenraum geöffnet und gereinigt werden. In der Zwischenzeit kann ein neues Modul in den Extruder eingesetzt und dieser mit einem anderen Material betrieben werden. Da das Modul keine Bauteile der Kühl- oder Heizvorrichtung, der dafür notwendigen Sensorik oder Steuerung besitzt, sondern lediglich aus Metallteilen besteht, lässt es sich schnell und effektiv reinigen, ohne dass die Gefahr einer Beschädigung von Bauteilen besteht.

## Patentansprüche

1. Extruder (10) mit einem Extrudergehäuse (11), das zumindest zwei Gehäuseteile (12, 13) aufweist und in dem zum Extrudieren eines Mediums ein Förderkanal (14) ausgebildet ist, in dem zumindest eine Förderschnecke (15) angeordnet ist, wobei das Extrudergehäuse (11) mittels einer ersten Haltevorrichtung (20) lösbar auf einem Gestell (18) gehalten und die Förderschnecke (15) an einem Wellenabschnitt (28) in lösbarer Weise mit einer Antriebsvorrichtung (26) verbunden ist, wobei die Gehäuseteile (12, 13) mittels einer zweiten Haltevorrichtung (22) relativ zueinander fixiert sind, und wobei das Extrudergehäuse (11) mittels einer dritten Haltevorrichtung (25) mit dem Gestell (18) verbunden und gegen ein Verschieben in Längsrichtung des Extrudergehäuses (11) gesichert ist, **dadurch gekennzeichnet, dass** an dem Gestell (18) unterhalb des Extrudergehäuses (11) eine Kühl- und/oder Heizvorrichtung (19) angebracht ist, dass das Extrudergehäuse (11) auf die Kühl-und/oder Heizvorrichtung (19) aufgesetzt und auf dieser mittels der ersten Haltevorrichtung (20) gehalten ist, dass das Extrudergehäuse (11) mittels der ersten Haltevorrichtung (20) auf die Kühl- und/oder Heizvorrichtung (19) gespannt ist und diese thermisch kontaktiert, und dass die Gehäuseteile (12, 13) bei gelöster erster und dritter Haltevorrichtung (20, 25) als Einheit von dem Gestell (18) und der Kühl- und/oder Heizvorrichtung (19) abnehmbar sind.

2. Extruder nach Anspruch 1, **dadurch gekennzeichnet, dass** die Förderschnecke (15) mittels eines Sicherungsteils (17, 24) in ihrer Axialbewegung innerhalb des Förderkanals (14) beschränkt und an einem Herausfallen gehindert ist.

3. Extruder nach einem der Ansprüche 1 oder 2, **dadurch gekennzeichnet, dass** die zweite Haltevorrichtung (22) mehrere in Längsrichtung des Extrudergehäuses (11) beabstandete Halteeinheiten (23) aufweist.

4. Extruder nach Anspruch 3, **dadurch gekennzeichnet, dass** die Halteeinheiten (23) Spannklammern sind.

5. Extruder nach einem der Ansprüche 3 oder 4 **dadurch gekennzeichnet, dass** am vorderen Ende des Extrudergehäuses (11) eine Düse (17) lösbar befestigt ist.

6. Extruder nach Anspruch 5, **dadurch gekennzeichnet, dass** die Düse (17) mittels einer der Halteeinheiten (23) der zweiten Haltevorrichtung (22) an dem Extrudergehäuse (11) befestigt ist.

7. Extruder nach einem der Ansprüche 3 bis 6, **dadurch gekennzeichnet, dass** am hinteren Ende des Extrudergehäuses (11) ein Kupplungsteil (27) lösbar befestigt ist.

8. Extruder nach Anspruch 7, **dadurch gekennzeichnet, dass** das Kupplungsteil (27) mittels einer der Halteeinheiten (23) der zweiten Haltevorrichtung (22) an dem Extrudergehäuse (11) befestigt ist.

9. Extruder nach einem der Ansprüche 1 bis 8, **dadurch gekennzeichnet, dass** die Förderschnecke (15) mit ihrem Wellenabschnitt (28) in Steckverbindung mit einer Abtriebswelle (29) der Antriebsvorrichtung (26) steht.

10. Extruder nach einem der Ansprüche 1 bis 9, **dadurch gekennzeichnet, dass** die dritte Haltevorrichtung (25) im Bereich des Wellenabschnitts (28) der Förderschnecke (25) angeordnet ist.

11. Extruder nach einem der Ansprüche 7 bis 10, **dadurch gekennzeichnet, dass** die dritte Haltevorrichtung (25) zwischen dem Kupplungsteil (27) und dem Gestell (18) wirksam ist.

## Claims

1. An extruder (10) with an extruder housing (11), which has at least two housing parts (12, 13) and which has, for the extruding of a medium, a conveyor tunnel (14), in which at least one screw conveyor (15) is placed, wherein the extruder housing (11) is removably held on a frame (18) by a first holding device (20) and the screw conveyor (15) is connected to a driving device (26) at a shaft section (28) in a removable manner, wherein the housing parts (12, 13) are fixed relative to each other by a second holding device (22), and wherein the extruder housing (11) is connected to the frame (18) and is secured against a lengthwise movement by a third holding device (25), **characterized in that** a cooling/heating device (19) is mounted on the frame (18) underneath the extruder housing (11), that the extruder housing (11) is mounted on the cooling/heating device (19) and is held thereon by the first holding device (20), that the extruder housing (11) is tensioned on the cooling/heating device (19) and contacts it thermically, and that the housing parts (12, 13) can be removed as a unit from the frame (18) and the cooling/heating device (19) when the first and third holding device (20, 25) are released.

2. The extruder according to claim 1, **characterized in that** the screw conveyor (15) is limited in its axial movement in the conveyor tunnel (14) and is protected from falling out by a locking element (17, 24).

3. The extruder according to one of the claims 1 or 2, **characterized in that** the second holding device (22) has several holding units (23), which are arranged lengthwise the extruder housing (11).

4. The extruder according to claim 3, **characterized in that** the holding units (23) are tension clamps.

5. The extruder according to one of the claims 3 or 4, **characterized in that** a nozzle (17) is mounted on the front end of the extruder housing (11) in a removable manner.

6. The extruder according to claim 5, **characterized in that** the nozzle (17) is held on the extruder housing (11) by one of the holding units (23) of the second holding device (22).

7. The extruder according to on of the claims 3 to 6, **characterized in that** a coupling element (27) is mounted on the back end of the extruder housing (11) in a removable way.

8. The extruder according to claim 7, **characterized in that** the coupling element (27) is held on the extruder housing (11) by one of the holding units (23) of the second holding device (22).

9. The extruder according to one of the claims 1 to 8, **characterized in that** the screw conveyor (15) with its shaft section (28) is connected to a drive shaft (29) of the driving device (26) by a plug connection.

10. The extruder according to one of the claims 1 to 9, **characterized in that** the third holding device (25) is arranged in the area of the shaft section (28) of the screw conveyor (15).

11. The extruder according to one of the claims 7 to 10, **characterized in that** the third holding device (25) operates between the coupling element (27) and the frame (18).

## Revendications

1. Extrudeuse (10) avec un boîtier d'extrudeuse (11) comportant au moins deux parties de boîtier (12, 13) et dans lequel un canal de transport (14) est réalisé pour extruder un agent, au moins une vis sans fin de transport (15) étant disposée dans ledit canal, le boîtier d'extrudeuse (11) étant maintenu de façon amovible sur un châssis (18) à l'aide d'un premier dispositif de fixation (20) et la vis sans fin de transport (15) étant reliée de façon amovible à un dispositif d'entraînement en entrée (26) au niveau d'une section d'arbre (28), les parties de boîtier (12, 13) étant fixées l'une par rapport à l'autre à l'aide d'un deuxième dispositif de fixation (22) et le boîtier d'extrudeuse (11) étant relié au châssis (18) à l'aide d'un troisième dispositif de fixation (25) et étant sécurisé contre un déplacement dans la direction longitudinale du boîtier d'extrudeuse (11), **caractérisée en ce qu'**un dispositif de chauffage et/ou de refroidissement (19) est placé au niveau du châssis (18) en dessous du boîtier d'extrudeuse (11), que le boîtier d'extrudeuse (11) est placé sur le dispositif de chauffage et/ou de refroidissement (19) et est maintenu sur celui-ci à l'aide du premier dispositif de fixation (20), que le boîtier d'extrudeuse (11) est serré sur le dispositif de chauffage et/ou de refroidissement (19) à l'aide du premier dispositif de fixation (20) et entre en contact thermiquement avec lui et que les parties de boîtier (12, 13) peuvent être retirées du châssis (18) et du dispositif de chauffage et/ou de refroidissement (19) sous la forme d'une unité lorsque le premier et le troisième dispositif de fixation (20, 25) sont desserrés.

2. Extrudeuse selon la revendication 1, **caractérisée en ce que** la vis sans fin de transport (15) est limitée dans son mouvement axial à l'intérieur du canal d'extraction (14) à l'aide d'une partie de protection (17, 24) et qu'elle ne peut ainsi pas tomber.

3. Extrudeuse selon l'une quelconque des revendications 1 ou 2, **caractérisée en ce que** le deuxième dispositif de fixation (22) comporte plusieurs unités de fixation (23) espacées dans la direction longitudinale du boîtier d'extrudeuse (11).

4. Extrudeuse selon la revendication 3, **caractérisée en ce que** les unités de fixation (23) sont des attaches de serrage.

5. Extrudeuse selon l'une quelconque des revendications 3 ou 4, **caractérisée en ce qu'**une buse (17) est fixée de façon amovible au niveau de l'extrémité avant du boîtier d'extrudeuse (11).

6. Extrudeuse selon la revendication 5, **caractérisée en ce que** la buse (17) est fixée au boîtier d'extrudeuse (11) à l'aide d'une des unités de fixation (23) du deuxième dispositif de fixation (22).

7. Extrudeuse selon l'une quelconque des revendications 3 à 6, **caractérisée en ce qu'**une partie de couplage (27) est fixée de façon amovible à l'extrémité arrière du boîtier d'extrudeuse (11).

8. Extrudeuse selon la revendication 7, **caractérisée en ce que** la partie de couplage (27) est fixée au boîtier d'extrudeuse (11) à l'aide d'une des unités de fixation (23) du deuxième dispositif de fixation (22).

9. Extrudeuse selon l'une quelconque des revendications 1 à 8, **caractérisée en ce que** la vis sans fin de transport (15) avec la section d'arbre (28) est en liaison par enfichage avec un arbre d'entraînement en sortie (29) du dispositif d'entraînement en entrée (26).

10. Extrudeuse selon l'une quelconque des revendications 1 à 9, **caractérisée en ce que** le troisième dispositif de fixation (25) est disposé dans la zone de la section d'arbre (28) de la vis sans fin de transport (25).

11. Extrudeuse selon l'une quelconque des revendications 7 à 10, **caractérisée en ce que** le troisième dispositif de fixation (25) est actif entre la partie de couplage (27) et le châssis (18).
